# EUROPÄISCHE PATENTANMELDUNG

(11) **EP 4 674 691 A2**
(43) Veröffentlichungstag der Anmeldung: **07.01.2026**
(21) Anmeldenummer: 25186284.3
(22) Anmeldetag: 30.06.2025
(51) Int. Cl.: B60R 11/00

(54) **TRANSPORTSYSTEM FÜR BETRIEBSBEREITE MESS- UND DATENSYSTEM IN KFZ**

(30) Priorität: 01.07.2024 DE 202024001249 U; 31.10.2024 DE 202024106251 U
(71) Anmelder: SARP Feinmechanik GmbH, 85659 Forstern-Preisendorf (DE)
(72) Erfinder: SCHWINGHAMMER, Anton, 85659 Forstern-Preisendorf (DE)
(74) Vertreter: Misselhorn, Hein-Martin

(57) **Zusammenfassung**

System zur unfallsicheren Verankerung von betriebsbereiten Mess- und/oder Datenverarbeitungsgeräten im Kofferraum eines Fahrzeugs, bestehend aus einer Halteplatte (1) und einer daran fest verankerbaren Adapterplatte (2), wobei die Halteplatte mehrere Öffnungen (3a, 3b) aufweist, von denen jede jeweils ein eine hinreichend feste Verbindung von ihr zum Fahrzeug herstellendes Haltemittel aufnimmt, und eine formschlüssig an sie ankoppelbare Adapterplatte (2), bevorzugt aus Blech, die idealerweise eine Vielzahl von vorgefertigten Bohrungen (4) zum Anschrauben von Mess- und/oder Datenverarbeitungsgeräten und deren Komponenten aufweist.

## Beschreibung

### BEREICH DER ERFINDUNG

Die Erfindung betrifft ein System zum Verankern mindestens eines, meist mehrerer temporär in der Fahrgastzelle und/oder dem Kofferraum eines Fahrzeugs mitgeführter Geräte zur Aufnahme von Messwerten und/oder Daten während der Fahrt.

### TECHNISCHER HINTERGRUND

Zwar findet die Fahrzeugentwicklung und -erprobung mehr denn je erst einmal virtuell auf dem Computer statt. Dennoch ist es bis heute unerlässlich, in einem fortgeschrittenen Entwicklungsstadium, in dem schon erste Prototypen des neuentwickelten Fahrzeugs zur Verfügung stehen, mit diesen Prototypen reale Messfahrten auf der Straße vorzunehmen, um die vorherigen Computersimulationen, die von der Fahrgeräuschentwicklung über die Fahrwerksdynamik und die Verwindungsfestigkeit der selbsttragenden Karosserie bis hin zum Motorverhalten reicht, zu überprüfen.

Zu diesem Zweck müssen oft komplexe und schwere Mess- und Datenverarbeitungssysteme in der Fahrgastzelle oder zumindest im Kofferraum mitgeführt werden. Es ist schwierig, solche Mess- und Datenverarbeitungssysteme so in der Fahrgastzelle oder dem Kofferraum zu befestigen, dass einerseits die Inneneinrichtung des Prototypens keinen Schaden durch willkürlich irgendwo eingetriebene Schrauben für eigentlich nicht vorgesehene Haltelaschen nimmt, und andererseits die Mess- und Datenverarbeitungssysteme im Falle eines Unfalls während der Erprobungsfahrt nicht zu lebensgefährlichen Geschossen in der Fahrgastzelle werden. Je komplexer das jeweilige Mess- und Datenverarbeitungssystem aufgebaut ist, d. h. je mehr einzelne, miteinander verkabelte Komponenten das Mess- und Datenverarbeitungssystem bilden, desto schwieriger wird dessen sichere Befestigung in einer Art und Weise, die dem System nicht seine Funktionstüchtigkeit während der Fahrt nimmt.

Für Mess- und Datenverarbeitungsgeräte, die innerhalb der Fahrgastzelle auf dem Beifahrersitz oder der Rücksitzbank mitgeführt werden, hat die Anmelderin schon eine bewährte Lösung vorgeschlagen. Diese sieht so aus, wie von der DE 20 2019 100 463 U1 beschrieben. Problembehaftet ist aber immer noch die sichere Unterbringung solcher Mess- und Datenverarbeitungsgeräte im Kofferraum. Speziell bei Geländewagen oder Kombi-PKW besteht hier nach wie vor ein erhebliches Gefahrenpotenzial, weil der Kofferraum bei diesen Fahrzeugtypen nicht von Haus aus vollständig vom Fahrgastraum getrennt ist. Aber auch bei Limousinen besteht eine gewisse Gefahr, da die Lehnen der Rücksitzbänke meist klappbar sind, um eine Durchlademöglichkeit für sperrigeres Gepäck zu bieten.

### AUFGABE DER ERFINDUNG

In Anbetracht des eben Gesagten besteht die Aufgabe darin, eine Möglichkeit zu schaffen, Mess- und/oder Datenverarbeitungsgeräte auf einfache Art und Weise unfallsicher im Kofferraum eines PKW festzusetzen.

### ERFINDUNGSGEMÄSSE LÖSUNG

Eine Lösung dieser Aufgabe wird durch den Hauptanspruch bereitgestellt.

Erfindungsgemäß wird hierzu ein System zur unfallsicheren Verankerung von betriebsbereiten Mess- und/oder Datenverarbeitungsgeräten im Kofferraum eines Fahrzeugs vorgeschlagen. Dieses System besteht aus einer Halteplatte und einer daran fest verankerbaren Adapterplatte. Das System zeichnet sich dadurch aus, dass die Halteplatte mehrere Öffnungen aufweist, von denen jede jeweils ein eine hinreichend feste Verbindung von ihr zum Fahrzeug herstellendes Haltemittel (z.B. Gurte oder Seile, die durch Zurrösen im Kofferraum geführt werden,) aufnimmt. Zudem umfasst das System eine formschlüssig an sie ankoppelbare Adapterplatte, bevorzugt aus Blech, die idealerweise eine Vielzahl von vorgefertigten Bohrungen zum Anschrauben von Mess- und/oder Datenverarbeitungsgeräten und deren Komponenten aufweist.

So kann auf einfache Art und Weise eine Möglichkeit geschaffen werden, Mess- und/oder Datenverarbeitungsgeräte zunächst im Büro oder außerhalb des PKWs an der Adapterplatte zu befestigen - mithilfe der Bohrungen -, während die Halteplatte schon fest im Kofferraum eines PKWs befestigt werden kann. Die Adapterplatte kann daraufhin formschlüssig mit der Halteplatte gekoppelt werden und bietet so ein unfallsicheres, einfaches und flexibel nutzbares Haltesystem.

### EINE WEITERE DER ERFINDUNG ZUGRUNDE LIEGENDE AUFGABE

Darüber hinaus liegt der Erfindung die Aufgabe zugrunde, ein möglichst flexibles System zur Verfügung zu stellen, mit welchem Gegenstände, wie beispielsweise Messtechnik, schnell und einfach in dem Kraftfahrzeug montiert werden kann.

### DIE WEITERE ERFINDUNGSGEMÄSSE LÖSUNG

Eine Lösung dieser Aufgabe wird durch den Anspruch 15 bereitgestellt.

Hier wird ein System vorgeschlagen, welches die erfindungsgemäße Halteplatte, eine Adapterplatte, einen zusätzlichen Adapter zur Befestigung an einem Rücksitz des Fahrzeugs, bevorzugt eine Abstützung, und einen zusätzlichen Adapter zur Befestigung an einem Beifahrersitz des Fahrzeugs umfasst.

Der Adapter zur Befestigung an dem Rücksitz ist in der noch nicht veröffentlichten Anmeldung 20 2024 103 585.2 beschrieben, welche vollumfänglich Teil dieser Offenbarung ist. Die entsprechende Anmeldung wird zusätzlich zu dieser Anmeldung als zusätzliches Dokument mit eingereicht.

Der Adapter zur Befestigung an dem Beifahrersitz ist in der noch nicht veröffentlichten Anmeldung 20 2024 103 584.4 beschrieben, welche vollumfänglich Teil dieser Offenbarung ist. Die entsprechende Anmeldung wird zusätzlich zu dieser Anmeldung als zusätzliches Dokument mit eingereicht.

Das erfindungsgemäße System zeichnet sich aus, dass Messtechnik und/oder mit der Messtechnik in Verbindung stehende Komponenten bevorzugt vollumfänglich auf der Adapterplatte montiert wird bzw. werden. Die Adapterplatte wird bevorzugt über die pilzförmigen Vorsprünge (Formschlusselemente) der Adapterplatte, die in die entsprechend kooperierenden Befestigungsvorrichtungen eingreifen, montiert, wobei die Adapterplatte auf die gleiche Art und Weise auf der Halteplatte des Adapters am Rücksitz montiert werden kann oder am Adapter des Beifahrersitzes montiert werden kann oder an der Halteplatte im Kofferraum montiert werden kann.

So kann auf einfache Art und Weise ein flexibles Befestigungssystem geschaffen werden, bei welchem die Messtechnik bzw. damit in Verbindung stehende Komponenten außerhalb des Kraftfahrzeugs, bevorzugt sogar schon im Labor, auf eine Adapterplatte montiert werden können. Im Fahrzeug sind dann bevorzugt schon ein Adapter am Beifahrersitz, mindestens ein Adapter auf einem der Rücksitze und/oder eine Halteplatte im Kofferraum montiert. Der Benutzer kann dann je nach Testsituation flexibel entscheiden, auf welches der aufnehmenden Teile die Adapterplatte montiert werden soll. Darüber hinaus ist die Montage und Demontage der Adapterplatte sehr einfach und schnell durchzuführen, bevorzugt ohne Werkzeug und nur durch das Aufsetzen und Verschieben der Adapterplatte.

Es sei hier betont, dass die Verbindung der Adapterplatte mit den aufnehmenden Teilen über die pilzförmigen Vorsprünge (Formschlusselemente) und den entsprechend aufnehmenden Bohrungen mit Langloch (Befestigungsbohrrichtungen) bevorzugt ist, jedoch auch andere Arten der Befestigung denkbar sind. Das Ziel der Befestigung ist eine leicht zu lösende und dennoch sichere Verbindung zu den aufnehmenden Teilen.

### FIGURENLISTE

Die Figur 1 zeigt eine erfindungsgemäße Halteplatte in dreidimensionaler Ansicht von unten.
Die Figur 2 zeigt die erfindungsgemäße Halteplatte in dreidimensionaler Ansicht von oben.
Die Figur 3 zeigt eine erfindungsgemäße Adapterplatte in dreidimensionaler Ansicht von unten.
Die Figur 4 zeigt die erfindungsgemäße Adapterplatte in dreidimensionaler Ansicht von oben.
Die Figur 5 zeigt eine Pilzführung in dreidimensionaler Ansicht.
Die Figur 6 zeigt analog zu Fig. 1 eine erfindungsgemäße Halteplatte in dreidimensionaler Ansicht von unten; im Vergleich zu Fig. 1 ist die Halteplatte jedoch deutlich größer ausgeführt.
Die Figur 7 zeigt die erfindungsgemäße Halteplatte aus Fig. 6 in dreidimensionaler Ansicht von unten.

### BEVORZUGTE AUSFÜHRUNGSFORMEN

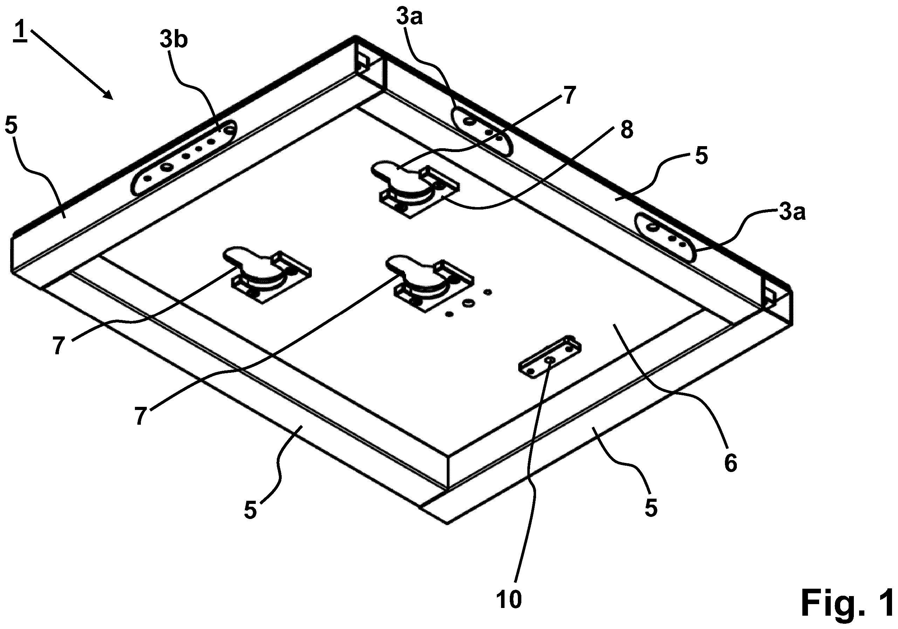

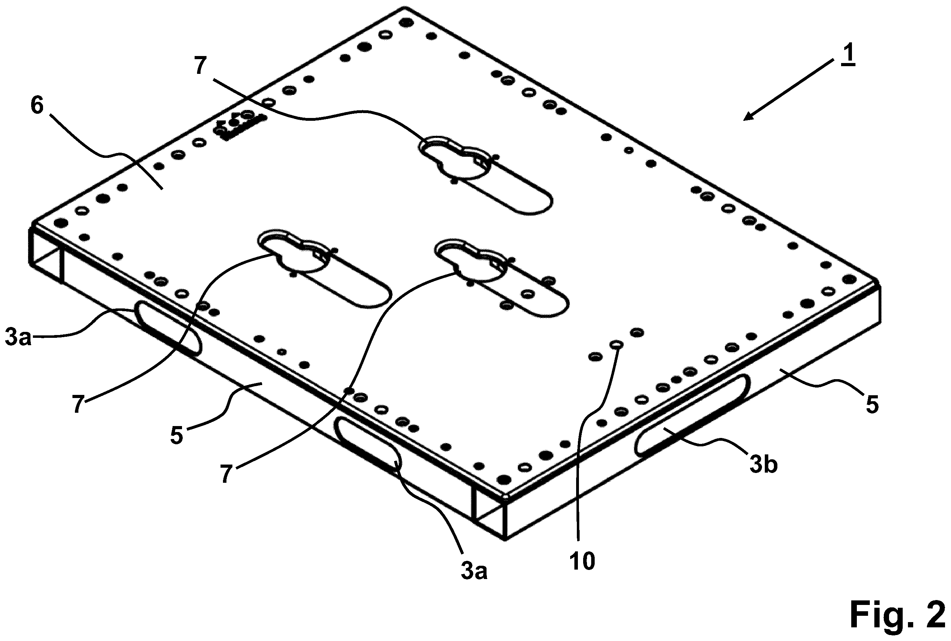

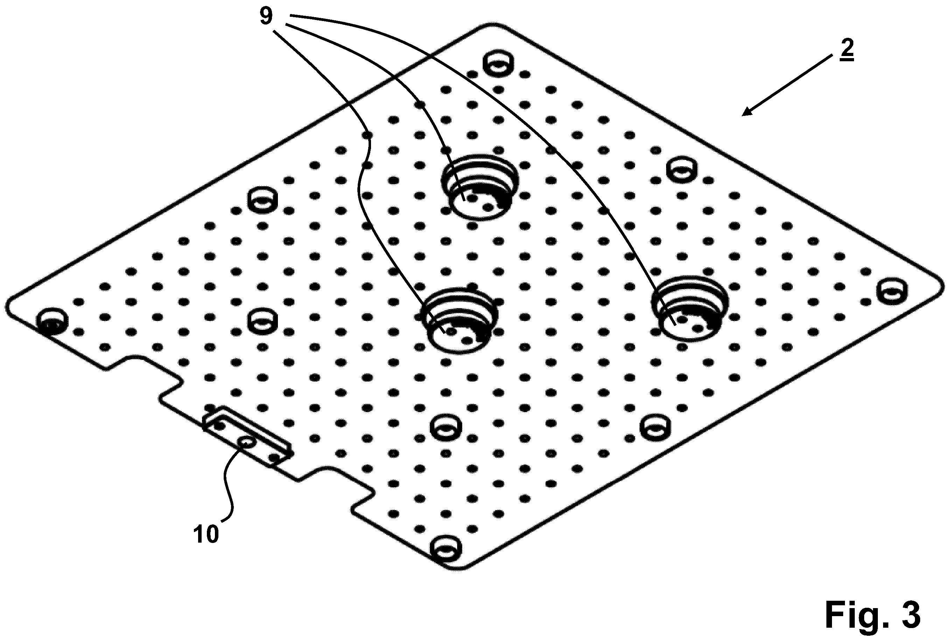

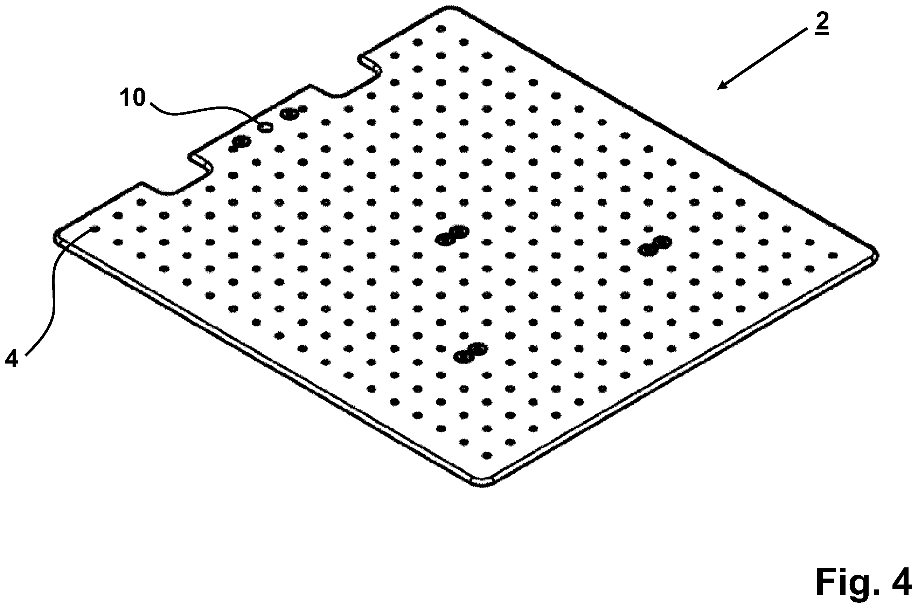

Das erfindungsgemäße System zur unfallsicheren Verankerung von betriebsbereiten Mess- und/oder Datenverarbeitungsgeräten im Kofferraum eines Fahrzeugs besteht aus einer Halteplatte 1 (siehe Fig. 1 und Fig. 2) und einer daran fest verankerbaren Adapterplatte 2 (siehe Fig. 3 und Fig. 4).

Die Halteplatte 1 weist mehrere Öffnungen 3a auf, bevorzugt in Gestalt von bevorzugt gratfreien und nicht scharfkantig berandeten Fenstern, welche zum Durchlassen von Gurten genutzt werden, mit denen die Halteplatte 1 von den Zurrösen am Kofferraumboden gehalten wird.

Die ankoppelbare Adapterplatte 2 besteht bevorzugt aus Blech und umfasst idealerweise eine Vielzahl von vorgefertigten Bohrungen 4 zum Anschrauben von Mess- und/oder Datenverarbeitungsgeräten und deren Komponenten.

Die Halteplatte weist zudem bevorzugt weitere Öffnungen 3b in Gestalt von bevorzugt gratfreien und nicht scharfkantig berandeten Fenstern auf, die als Grifföffnungen zur Aufnahme einer Hand bzw. deren Fingerpartie dienen und das Laden vereinfachen.

Die Halteplatte 1 weist zudem bevorzugt örtliche Abstandshalter 5 auf, die sie in fest montiertem Zustand auf Abstand vom Kofferraumboden halten. Um diese Abstandshalter 5 einfach realisieren zu können, liegt die ebene Platte 6 der Halteplatte 1 bevorzugt auf einem umlaufenden Rohrrahmen auf, wobei der Rohrrahmen zur Auflage auf dem Kofferraumboden gedacht ist.

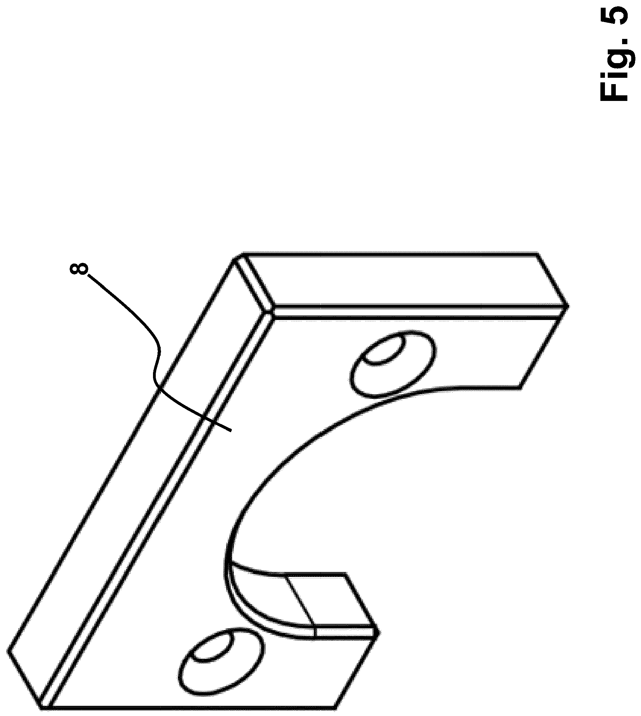

Die Halteplatte 1 weist bevorzugt mehrere Befestigungsvorrichtungen 7, bevorzugt in Gestalt schlüssellochartiger Fenster, auf, in die jeweils ein Formschlusselement 9 der Adapterplatte 2 eingeführt und verriegelt werden kann. Die Befestigungsvorrichtungen 7 sind bevorzugt zumindest einseitig mit Pilzkopfführungen 8 (siehe auch Fig. 5) verstärkt, die bevorzugt unterhalb der ebenen Platte 6 angebracht sind. Diese Pilzkopfführung 8 dient als einfacher Zentrieranschlag, beim Entnehmen bzw. beim Abdocken der oben beschriebenen Adapterplatte 2.

Die Adapterplatte 2 weist auf ihrer bestimmungsgemäß der Halteplatte 1 zugewandten Seite mehrere Formschlusselemente 9 auf. Diese sind bevorzugt in der Gestalt von Pilzköpfen zum Einhängen in die Befestigungsvorrichtungen 7 ausgeführt. Diese Befestigungsvorrichtungen 7 sind wie erwähnt bevorzugt in Gestalt schlüssellochartigen Fenster ausgeführt.

Jedes Formschlusselement 9 hat hierbei bevorzugt die Gestalt eines Pilzkopfes. Hierbei trägt ein schlankerer Stiel eine Kappe, die durch den größeren Abschnitt der schlüssellochartigen Öffnung in den Bereich unterhalb der Halteplatte 1 gebracht werden und durch weiteres Verschieben in den Bereich des engeren Abschnitts der schlüssellochartigen Öffnung formschlüssig mit der Halteplatte 1 verbunden werden kann.

So können Mess- und/oder Datenverarbeitungsgeräte zunächst außerhalb des PKWs an der Adapterplatte 2 mithilfe der Vielzahl von Bohrungen 4 befestigt werden. Die Halteplatte 1 kann schon fest im Kofferraum eines PKWs befestigt werden, mithilfe von Gurten, die an Zurrösen aufgehängt werden und durch die Öffnungen 3a gezogen werden. Die Adapterplatte 2 kann daraufhin formschlüssig mit der Halteplatte 1 gekoppelt werden, indem sie auf diese aufgesetzt wird, wie oben erläutert.

Eine zusätzliche Sicherung des Systems wird dadurch erreicht, dass die Halteplatte 1 und die Adapterplatte 2 mindestens je eine Bohrung 10 aufweisen, die nach der vollständigen formschlüssigen Verbindung der Halteplatte 1 mit der Adapterplatte 2 miteinander fluchten, sodass sich ein Blockierstift einführen lässt, der ein unbeabsichtigtes Wiederentriegeln der formschlüssigen Verbindung zwischen der Halteplatte 1 und der Adapterplatte 2 verhindert.

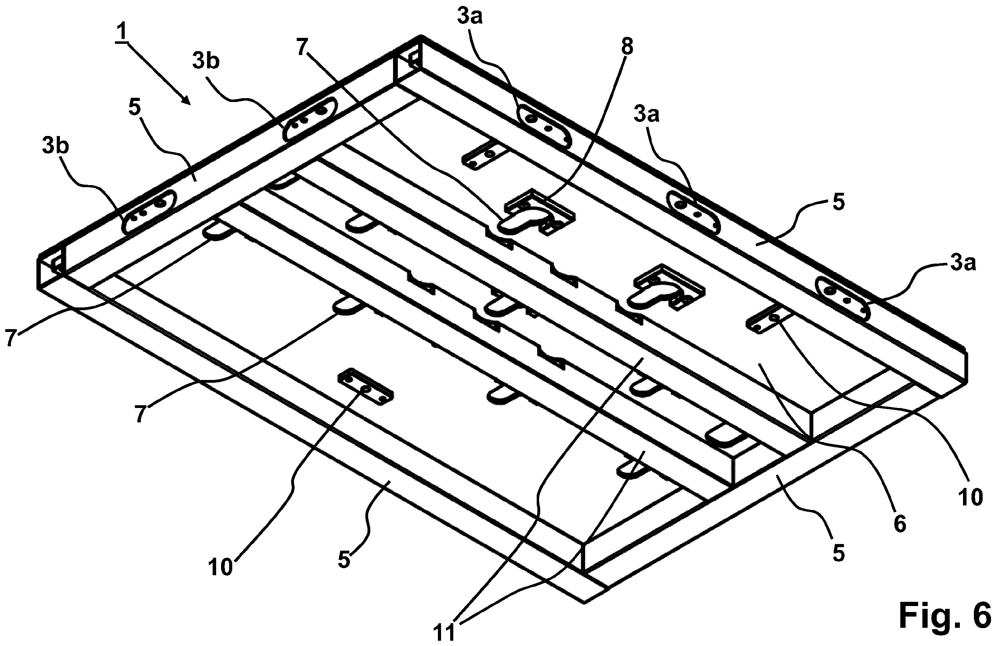

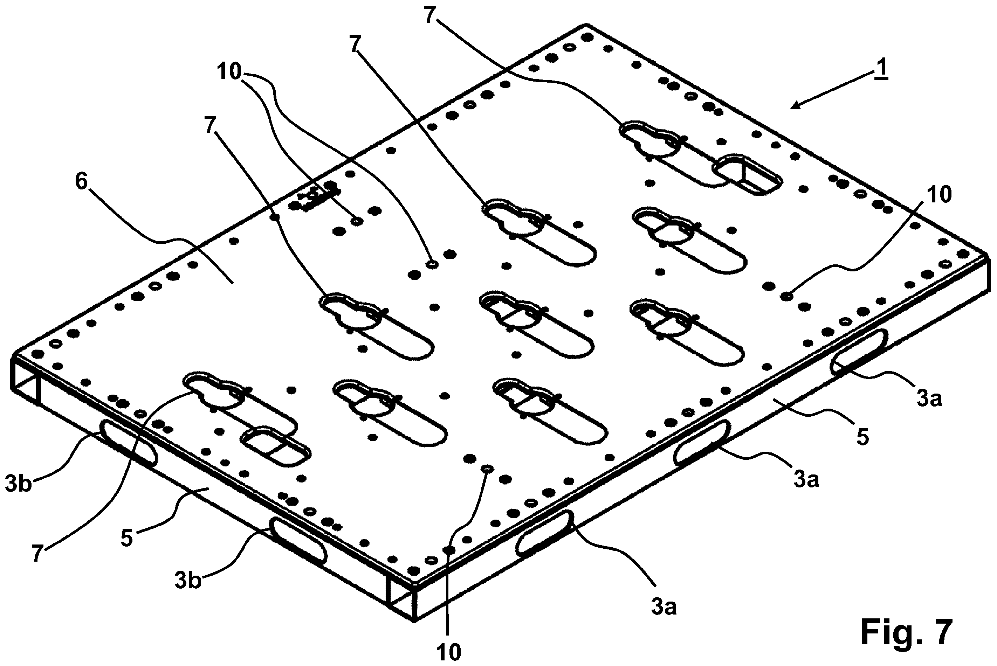

Die Fig. 6 und Fig. 7 zeigen zudem ein noch größeres Ausführungsbeispiel der Halteplatte 1 im Vergleich zu dem vorher gezeigten Ausführungsbeispiel. Diese Halteplatte 1 kann in Kraftfahrzeugen mit größerem Kofferraum oder auch auf Ladeplattformen, wie beispielsweise bei Pickup-Trucks, befestigt werden. Der Aufbau der Halteplatte 1 ist hierbei analog zu der schon eingangs beschriebenen Halteplatte 1. Es können jedoch entsprechend mehr Befestigungsvorrichtungen 7 an der ebenen Platte 6 vorgesehen werden. Entsprechend ist es bevorzugt, wenn auch entsprechend mehr Bohrungen 10 und mehr Öffnungen 3a und 3b vorgesehen werden, die einen zusätzlichen Schutz gewährleisten. Es kann zweckmäßig sein, wenn die Halteplatte 1 zusätzliche Querstreben 11 aufweist, um der Halteplatte 1 mehr Stabilität zu geben und/oder damit die ebene Platte 6 nicht durchbeult.

Die entsprechend zu montierende Adapterplatte 2 kann hierbei auch entsprechend größer ausgeführt sein. Es ist jedoch auch möglich, die schon beschriebene "kleine" Adapterplatte 2 aus Fig. 3 und Fig. 4 zu verwenden. Dies hätte zudem den Vorteil, dass die Adapterplatte 2 in verschiedenen Positionen an der Halteplatte 1 montiert werden kann.

### REFERENZLISTE

- 1: Halteplatte
- 2: Adapterplatte
- 3a: Öffnung für die Gurte
- 3b: Grifföffnung
- 4: Bohrungen der Adapterplatte
- 5: Abstandshalter
- 6: Ebene Platte
- 7: Befestigungsvorrichtung
- 8: Pilzkopfführung
- 9: Formschlusselement der Adapterplatte
- 10: Bohrung
- 11: Querstrebe

## Patentansprüche

1. System zur unfallsicheren Verankerung von betriebsbereiten Mess- und/oder Datenverarbeitungsgeräten im Kofferraum eines Fahrzeugs, bestehend aus einer Halteplatte (1) und einer daran fest verankerbaren Adapterplatte (2), **dadurch gekennzeichnet, dass** die Halteplatte (1) mehrere Öffnungen (3a, 3b) aufweist, von denen jede jeweils ein eine hinreichend feste Verbindung von ihr zum Fahrzeug herstellendes Haltemittel aufnimmt, und eine formschlüssig an sie ankoppelbare Adapterplatte (2), bevorzugt aus Blech, die idealerweise eine Vielzahl von vorgefertigten Bohrungen (4) zum Anschrauben von Mess- und/oder Datenverarbeitungsgeräten und deren Komponenten aufweist.

2. System gemäß Anspruch 1, **dadurch gekennzeichnet, dass** die Halteplatte (1) örtliche Abstandshalter (5) aufweist, die sie in fest montiertem Zustand auf Abstand vom Kofferraumboden halten.

3. System gemäß Anspruch 2, **dadurch gekennzeichnet, dass** die örtlichen Abstandshalter (5) durch einen umlaufenden Rohrrahmen gebildet werden, der zur Auflage auf dem Kofferraumboden gedacht ist und auf dem die bevorzugt ebene Platte (6) der Halteplatte (1) aufliegt.

4. System nach Anspruch 3, **dadurch gekennzeichnet, dass** die Rohre Vierkantrohre sind, bevorzugt aus Stahl.

5. System nach Anspruch 4, **dadurch gekennzeichnet, dass** die Rohre Öffnungen (3a) in Gestalt von bevorzugt gratfreien und nicht scharfkantig berandeten Fenstern zum Durchlassen von Gurten aufweisen, mit denen die Halteplatte (1) von den Zurrösen am Kofferraumboden gehalten wird.

6. System nach einem der vorhergehenden Ansprüche, **dadurch gekennzeichnet, dass** die Rohre Öffnungen (3b) in Gestalt von bevorzugt gratfreien und nicht scharfkantig berandeten Fenstern aufweisen, die als Grifföffnungen zur Aufnahme einer Hand bzw. deren Fingerpartie dienen und das Laden vereinfachen.

7. System nach einem der vorhergehenden Ansprüche, **dadurch gekennzeichnet, dass** die den Rohrrahmen bildenden Rohre nicht miteinander verschweißt sind.

8. System nach einem der vorhergehenden Ansprüche, **dadurch gekennzeichnet, dass** jedes Rohr mehrfach mit der ebenen Platte (6) der Halteplatte (1) verschraubt ist.

9. System nach einem der vorhergehenden Ansprüche, **dadurch gekennzeichnet, dass** jedes Rohr im Bereich jeder Öffnung (3a) bzw. über jeder Öffnung (3a) zum Durchlassen eines Gurts mehrfach mit der ebenen Platte (6) der Halteplatte verschraubt ist.

10. System nach einem der vorhergehenden Ansprüche, **dadurch gekennzeichnet, dass** die Halteplatte (1) mehrere Befestigungsvorrichtungen (7) bevorzugt in Gestalt schlüssellochartiger Fenster, bevorzugt verstärkt mit Pilzkopfführungen (8), besitzt, in die jeweils ein Formschlusselement (9) der Adapterplatte (2) eingeführt und verriegelt werden kann.

11. System nach einem der vorhergehenden Ansprüche, **dadurch gekennzeichnet, dass** die Adapterplatte (2) auf ihrer bestimmungsgemäß der Halteplatte (1) zugewandten Seite mehrere Formschlusselemente (9), bevorzugt in der Gestalt von Pilzköpfen, zum Einhängen in die Befestigungsvorrichtungen (7), bevorzugt in Gestalt schlüssellochartigen Fenster, der Halteplatte (1) aufweist.

12. System nach einem der vorhergehenden Ansprüche, **dadurch gekennzeichnet, dass** die Halteplatte (1) und die Adapterplatte (2) mindestens je eine Bohrung (10) aufweisen, die nach der vollständigen formschlüssigen Verbindung der Halteplatte (1) mit der Adapterplatte (2) miteinander fluchten, sodass sich ein Blockierstift einführen lässt, der ein unbeabsichtigtes Wiederentriegeln der formschlüssigen Verbindung zwischen der Halteplatte (1) und der Adapterplatte (2) verhindert.

13. System nach einem der vorhergehenden Ansprüche, **dadurch gekennzeichnet, dass** jedes Formschlusselement (9), bevorzugt in Gestalt eines Pilzkopfes, der Adapterplatte (2) eine von einem schlankeren Stiel getragene Kappe aufweist, die durch den größeren Abschnitt der schlüssellochartigen Öffnung in den Bereich unterhalb der Halteplatte (1) gebracht werden und durch weiteres Verschieben in den Bereich des engeren Abschnitts der schlüssellochartigen Öffnung formschlüssig mit der Halteplatte (1) verbunden werden kann.

14. System umfassend einen Halteplatte (1) und eine Adapterplatte (2), **dadurch gekennzeichnet, dass** Messtechnik und/oder mit der Messtechnik in Verbindung stehende Komponenten auf der Adapterplatte (2) montiert wird, welche über die Formschlusselemente (9) und die entsprechenden Befestigungsvorrichtungen (7) an der Halteplatte (1) montiert wird.

15. System umfassend eine Halteplatte (1), eine Adapterplatte (2), einen Adapter zur Befestigung an einem Beifahrersitz des Fahrzeugs und einen Adapter zur Befestigung an einem Rücksitz des Fahrzeugs, bevorzugt mit einer zusätzlichen Abstützung, **dadurch gekennzeichnet, dass** Messtechnik und/oder mit der Messtechnik in Verbindung stehende Komponenten auf der Adapterplatte (2) montiert wird, welche über die Formschlusselemente (9) der Adapterplatte (2) und die entsprechenden Befestigungsvorrichtungen (7) entweder am Adapter des Beifahrersitzes montiert werden kann oder auf ebenjene Weise am Adapter des Rücksitzes montiert werden kann oder auf ebenjene Weise an der Halteplatte (1) im Kofferraum montiert werden kann.
